# EUROPEAN PATENT SPECIFICATION

(11) **EP 3 767 914 B1**
(45) Date of publication and mention of the grant of the patent: **05.03.2025**
(21) Application number: 20178178.8
(22) Date of filing: 04.06.2020
(51) Int. Cl.: H04L 9/40, G06F 21/57

(54) **SYSTEM AND METHOD OF DETECTING ANOMALIES IN A TECHNOLOGICAL SYSTEM**
SYSTEM UND VERFAHREN ZUR ERKENNUNG VON ANOMALIEN IN EINEM TECHNOLOGISCHEN SYSTEM
SYSTÈME ET PROCÉDÉ DE DÉTECTION D'ANOMALIES DANS UN SYSTÈME TECHNOLOGIQUE

(30) Priority: 17.07.2019 RU 2019122436; 13.11.2019 US 201916682027
(43) Date of publication of application: 20.01.2021
(73) Proprietor: AO Kaspersky Lab, Moscow 125212 (RU)
(72) Inventor: SHADRIN, Alexander V., MOSCOW 125212 (RU); DYAKIN, Pavel V., MOSCOW 125212 (RU); KULAGIN, Dmitry A., MOSCOW 125212 (RU)
(74) Representative: De Lorenzo, Danilo

(56) References cited:
- WO-A1-2018/208715

## Description

### FIELD OF TECHNOLOGY

The present disclosure relates to the field of protection of information, more specifically, to systems and methods of increasing Information Technology (IT) security of technological system. For example, the system and method are directed to detection of anomalies in a technological system.

### BACKGROUND

One of the current problems of industrial security is the problem of secure functioning of Technological Processes (TPs). The principal threats to the functioning of TPs include unintentional or malicious actions in operational control, wear and failure of equipment and subunits, computer attacks on control systems and the Information Technology (IT) system, and others.

Automated Control Systems (ACSs) in enterprises control the technological systems. Thus, the ACSs need to be given an adequate level of security. The elements of technological systems, as well as the operating systems and firmware controlling those elements, often become obsolete. Frequent updating of the operating systems and firmware is not possible because the updates would lead to frequent interruptions in the technological processes. Furthermore, newer versions of the programs being updated may also contain defects that negatively impact the functional stability of the elements of the technological systems. Furthermore, existing obsolete ACSs, which are typically designed to stand in isolation, are often connected to computer networks. However, these obsolete ACSs generally do not have the means for ensuring IT security in the event of a malicious action from outside.

A widespread problem in technological systems is the need to use obsolete equipment that uses unprotected or vulnerable information transmission protocols. This is due to the fact that the service life of the equipment in such systems amounts to years or even decades, and during this time the information transmission protocols are able to become obsolete - thereby enabling vulnerabilities to appear as the equipment ages. In addition, replacing equipment that is already operating is a complicated and costly process (and is sometimes impossible). Therefore, security problems often go unsolved and vulnerabilities appear in the control systems of technological processes. A typical control network of technological systems includes elements of various types. The important elements include control computers (servers and client stations for Supervisory Control and Data Acquisition (SCADA)) and Programmable Logic Controllers (PLCs) which directly control the equipment (for example, actuators). The SCADA software is rather easy to update, while the updating of the PLC firmware requires the involvement of the equipment maker and is often an extremely hard problem to solve. In such a situation, hackers have an opportunity to influence the working of the PLC, which may result in serious consequences. For example, the equipment being monitored may malfunction causing disruptions to the technological processes of the technological system as a whole. In some scenario, the consequences may even be catastrophic.

One approach for solving the problems described above is to detect anomalies by performing an analysis of traffic within the data transmission network of the technological system. For instance, the software KICS for Networks of Kaspersky Laboratories describes anomaly detection using such analysis. However, this approach requires a large volume of a priori information about the PLC (e.g., knowledge about protocols and parameter values used by the PLC may be needed). In addition, the detection of anomalies in traffic of complex systems may contain errors, e.g., type I and type II errors (false positives and false negatives).

WO 2018/208715 A1 describes a system and a method for multilevel intrusion detection in an automation and control system.

Thus, there is a need for a more optimal way to detect anomalies in a technological system.

### SUMMARY

Aspects of the disclosure relate to the field of information security, more specifically the invention is defined by a method claim 1 and a system claim 8 for detecting anomalies in a technological system. Additional embodiments are defined in the dependent claims. The method is designed to improve the computer security. Thus, the method of the present disclosure advantageously enables information security of data.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1a** illustrates an example diagram of a technological system.
**Fig. 1b** illustrates a examplary implementation of a technological system.
**Fig. 2** illustrates an exemplary realization of a system for detecting anomalies in a technological system.
**Fig. 3** illustrates an exemplary method for detecting anomalies in a technological system.
**Fig. 4** presents an example of a general purpose computer system on which embodiments of the present disclosure can be implemented.

### DETAILED DESCRIPTION

Exemplary aspects are described herein in the context of a system, method, and a computer program for detecting anomalies in a technological system. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items.

In order to present the teachings of the present disclosure with clarity, a number of terms and concepts are defined herein.

An *object of control* is a technological object subjected to external actions (controlling and/or perturbing) for the purpose of changing its state; in a particular instance, such objects are devices (such as electric motors) or technological processes.

A *technological process (TP)* is a process of a material production, consisting of sequentially changing states of a material entity (a work object).

The *control of a technological process (process control)* is a set of methods used to control the technological parameters during the production of an end product.

A *technological parameter (process variable, PV)* is a current metered value of a particular portion of a TP which is being observed or monitored. A process variable might be, for example, a measurement from a detector.

An *external action* is a method of changing the state of an element subjected to the action (such as an element of a technological system) in a particular direction, the action being transmitted from one element of the technological system to another element of the technological system in a form of a signal.

The *state of an object of control* is the totality of its essential attributes, as expressed by parameters of state which are altered or maintained under the influence of external actions, including control actions from a control subsystem.

A *parameter of state* is one or more numerical values characterizing an essential attribute of an object; in one particular instance, a parameter of state is a numerical value of a physical quantity.

A *formal state of an object of control* is the state of the object of control corresponding to the process chart and other technological documentation (in the case of a TP) or a timetable (in the case of a device).

A *controlling action* is a deliberate (the goal of the action is to act on the state of the object), legitimate (provided for by the TP) external action on the part of the control subjects of a control subsystem on an object of control, resulting in a change of state of the object of control or a maintaining of the state of the object of control.

A *perturbing action* is a deliberate or unintentional illegitimate (i.e., not provided for by the TP) external action on the state of an object of control, including an action on the part of the control subject.

An *anomaly* is the occurrence of a perturbing action in a technological system.

A *control subject* is a device which applies a controlling action to an object of control or transmits a controlling action to another control subject for transformation before being applied directly to the object.

A *multilevel control subsystem* is a group of control subjects that involves several levels.

A *cyber-physical system* is an IT concept meaning the integration of computing resources into physical processes. In such a system, the detectors, equipment, and IT systems are connected along the entire chain of value creation beyond the boundaries of a single enterprise or business. These systems interact with each other by means of standard protocols for forecasting, feedback, and adapting to changes. Examples of a cyber-physical system are a technological system and an industrial Internet of Things.

The *Internet of Things (IoT)* is a computer network of physical objects ("things") equipped with built-in technologies for interacting with each other or with the outer world. The Internet of Things includes such technologies as portable devices, electronic systems of means of transportation, smart cars, smart cities, industrial systems, and others.

An *Industrial Internet of Things (IIoT)* is a subcategory of the Internet of Things which also includes applications oriented to the consumer, such as portable devices, "smart home" technologies and cars with automatic control. A distinguishing feature of both concepts is devices with built-in detectors, machine tools and infrastructure sending data through the Internet and controlled by means of software.

A *technological system (TS)* is a functionally interrelated group of control subjects of a multilevel control subsystem and an object of control (a TP or a device), realizing through a change in the states of the control subjects a change in state of the object of control. The structure of the technological system is formed by the basic elements of the technological system (the interrelated control subjects of the multilevel control subsystem and the object of control) and the links between these elements.

In the event that the object of control in the technological system is a technological process, the end goal of the control is: to change the state of the work object (raw material, blanks, etc.) by a change in the state of the object of control.

In the event that the object of control in the technological system is a device, the end goal of the control is to change the state of the device (a means of transportation, a spacecraft).

*A functional relationship of the elements of the TS* refers to a relationship of the states of these elements. It is noted that there may or may not be a direct physical link between the elements. For example, there is no physical link between actuators and a technological operation, yet the cutting speed, for example, is functionally related to the rotational speed of a spindle, even though these parameters of state are not physically connected.

The *state of a control subject* is the totality of its essential attributes, expressed by the parameters of state, and which can be altered or maintained under the influence of external actions.

The *essential attributes* (and accordingly the essential parameters of state) of a control subject are attributes having a direct influence on the essential attributes of the state of the object of control.

The *essential attributes of the object of control* are attributes having a direct influence on the operational factors being controlled (precision, safety, efficacy) for the TS. For example, cutting conditions corresponding to formally specified conditions, the movement of a train corresponding to a timetable, the maintaining of a reactor temperature within permissible limits. Depending on the factors being controlled, one will select the parameters of state of the object of control and accordingly parameters, related thereto, of the states of the control subjects exerting a controlling action on the object of control.

A *hypervisor* (a monitor of virtual machines) is a program creating an operational environment for other programs (including other hypervisors) by simulating computer hardware and controlling that hardware and the guest operating systems operating in that environment.

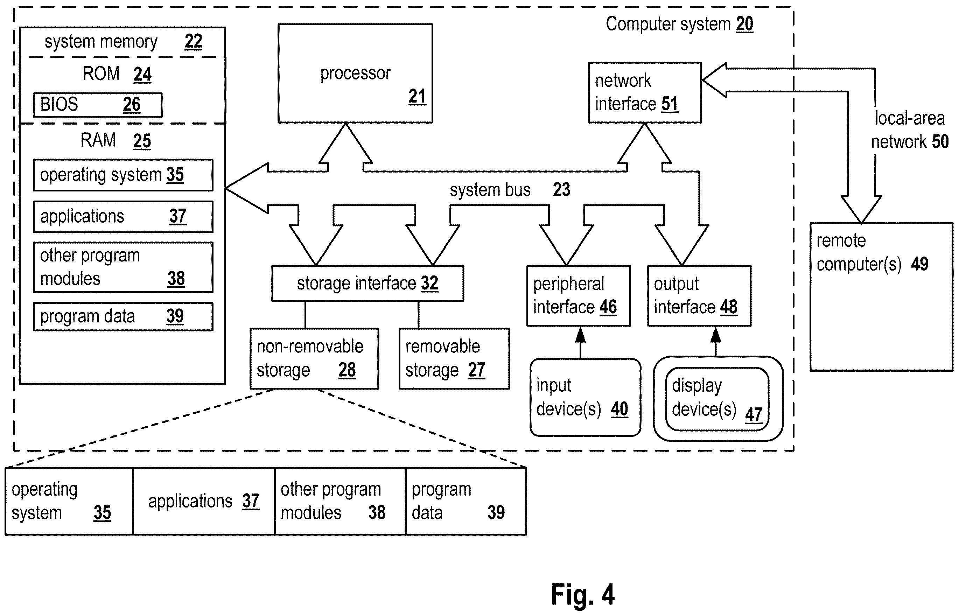

In one example, the present disclosure describes a system for detecting anomalies in a technological system that is implemented on a computing system (e.g., a server, computer, etc.), that includes real-world devices, systems, components, and groups of components realized with the use of hardware such as integrated microcircuits (application-specific integrated circuits, ASICs) or field-programmable gate arrays (FPGAs) or, for example, in the form of a combination of software and hardware such as a microprocessor system and set of program instructions, and also on neurosynaptic chips. The functionality of such means of the system may be realized solely by hardware, and also in the form of a combination, where some of the functionality of the system means is realized by software, and some by hardware. In certain examples, some or all of the components, systems, etc., may be executed on the processor of a general-purpose computer (such as the one shown in **Fig. 4**). Furthermore, the system components may be realized either within a single computing device or spread out among several interconnected computing devices.

In one example, the present disclosure describes a method for detecting anomalies that requires minimal a priori knowledge about the PLCs. The present method increases the level of protection of the technological system by guaranteeing detection of unauthorized interventions in the system. In one example, the interaction of the SCADA components with the PLCs protected using a secure connection (for example, using cryptographic protection schemes). Thus, detection of anomalies in a data transmission network is guaranteed. The detection is performed without carrying out a compilation of statistical data and/or checking and filtering network packets for their content (e.g., using DPI (deep packet inspection)). Moreover, the detection of anomalies is performed even in the case when certain elements of the technological system in the data transmission network are using unprotected data transmission protocols. In addition, the method of the present disclosure may also be used to detect malicious actions which may not be part of the TP and are often aimed at disrupting the flows of the TP. In this respect, the method of the present disclosure makes it is possible to provide a protected interaction of the SCADA components with the PLCs, even without modifying the software of the SCADA (e.g., by using virtualization technologies).

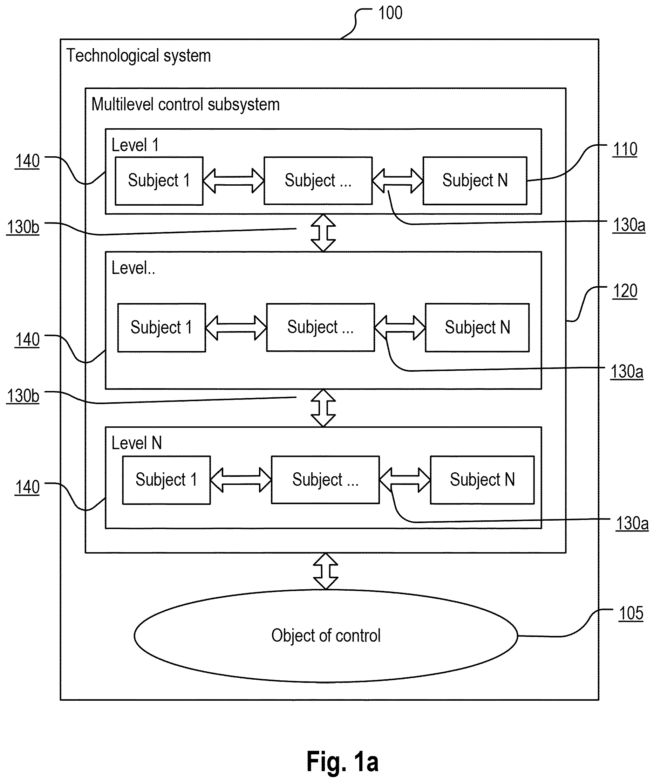

**Fig. 1a** illustrates an example diagram of a technological system **100.** The technological system 100 comprises an object of control 105 and a multilevel control subsystem 120. The multilevel control subsystem 120 includes a plurality of levels 140, e.g., levels 1, 2, ..., N, with each level comprising any number of control subjects 110. Horizontal links 130a interconnect subjects within a level and vertical links 130b interconnect the various levels, e.g., levels 1 and 2, levels 2 and 3, and the like. The control subjects are grouped by levels 140.

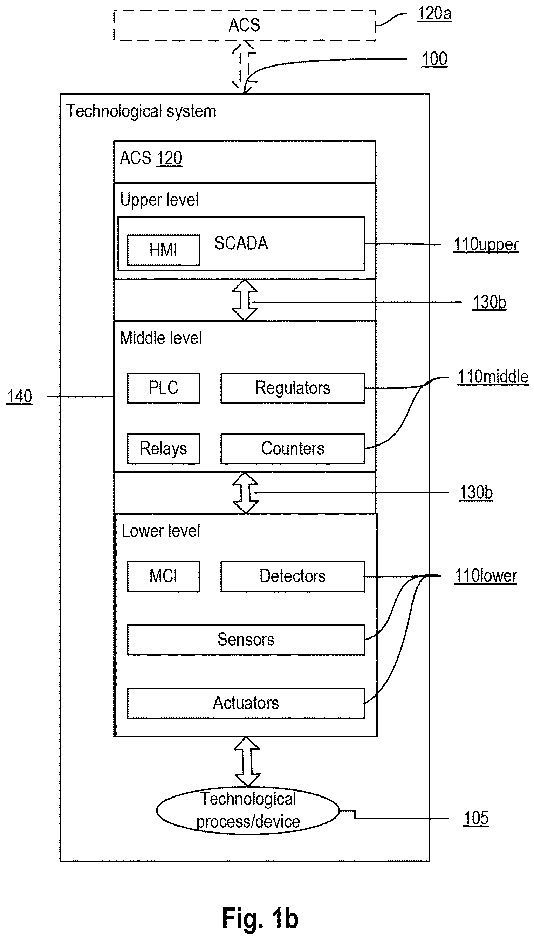

**Fig. 1b** illustrates a particular examplary implementation of a technological system **100.** The object of control 105 is a TP or a device; controlling actions are dispatched to the object of control 105, which actions are elaborated and realized by an automated control system (ACS) 120; in the ACS, three levels 140 are shown (upper level, middle level and lower level). The functions of the various levels are described below. Each of the upper, middle and lower levels consist control subjects 110 which are interconnected to each other by horizontal links (links within the level, not shown in the figure) and by vertical links 130b (links between levels). For clarity, the control subjects of the upper level are shown as 110ᵤₚₚₑᵣ, the control subjects of the middle level are shown as 110_{middle}, and the control subjects of the lower level are shown as 110_{lower}. The relationships are functional, i.e., in the general case, a change in a state of a control subject 110 on one level elicits changes in states of other control subjects 110 connected to it on the same level and on other levels. Information about the change in the state of the control subject is transmitted in a form of a signal along the horizontal and vertical links established between the control subjects, i.e., information on the change in the state of the particular control subject is an external action with respect to the other control subjects 110. The levels 140 in the ACS 120 are identified in accordance with the purpose of the control subjects 110. The number of levels may vary. For the physical linkage of the elements of the TS (i.e., 105 and 110) and the subsystems of the TS 100, wired networks, wireless networks, or integrated microcircuits are used; for the logical linkages between the elements of the TS (105, 110) and the subsystems of the TS 100, Ethernet, industrial Ethernet, or industrial networks are used. In these respect, the following industrial networks and protocols of various types and standards may be used: Profibus, FIP, ControlNet, Interbus-S, DeviceNet, P-NET, WorldFIP, LongWork, Modbus and others.

The upper level (the level of supervisory control and data acquisition, SCADA) is the level of dispatcher/operator control and includes at least the following control subjects 110ᵤₚₚₑᵣ: controllers which control computers and human-machine interfaces (HMI) (**Fig. 1b** shows the SCADA within a single control subject). This level is designed to track the states of the elements of the TS (105, 110ᵤₚₚₑᵣ), to obtain and compile information about the state of the elements of the TS (105, 110ᵤₚₚₑᵣ), and to correct the information if necessary.

The middle level (the CONTROL level) is the level of the controllers and includes at least the following control subjects: programmable logic controllers (PLC), counters, relays, regulators. The control subjects 110_{middle} of PLC type receive information from the control subjects of "measurement and control equipment" type and from the control subjects 110_{lower} of "detector" type as to the state of the object of control 105. The control subjects of PLC type elaborate (create) a controlling action in accordance with a programmed control algorithm for the control subjects of "actuator" type. The actuators realize the action directly (apply the action to the object of control) at the lower level. An actuator is part of an actuating device (equipment).

The lower level (the Input/Output level) is the level of control subjects such as: detectors and sensors, measurement and control instruments (MCI) which monitor the state of the object of control 105 and the actuators. The actuators act directly on the state of the object of control 105, in order to bring the state into compliance with a formal state, i.e., a state complying with a technological task, a technological chart or some other technological documentation (in the case of a TP) or a timetable (in the case of a device). On this lower level, the signals from the control subjects 110_{lower} of "detector" type are coordinated with the inputs of the control subjects of the middle level, and the controlling actions elaborated by the control subjects 110_{middle} of "PLC" type are coordinated with the control subjects 110_{lower} of "actuator" type, which implement the controlling actions. An actuator is part of an actuating device. An actuating device moves a regulating element in accordance with signals arriving from a regulator or a controlling device. Actuating devices are the last link in a chain of automatic control and in the general case consist of the units:
- an amplifying device (contactor, frequency converter, amplifier, and so on);
- an actuator (electric, pneumatic or hydraulic drive) with feedback elements (detectors of the position of an output shaft, a signaling of end positions, a manual drive, and so forth);
- a regulating element (gates, valves, shutters, slide valves, and so forth).

Depending on the application conditions, actuating devices may differ in their design. The actuators and regulating elements are usually among the basic units of the actuating devices.

In a particular example, the actuating device as a whole is known as the actuator.

The enumerated control subjects (110ᵤₚₚₑᵣ, 110_{middle}, 110_{lower}) of the different levels are the elements of the technological system (hereinafter referred to as the TS).

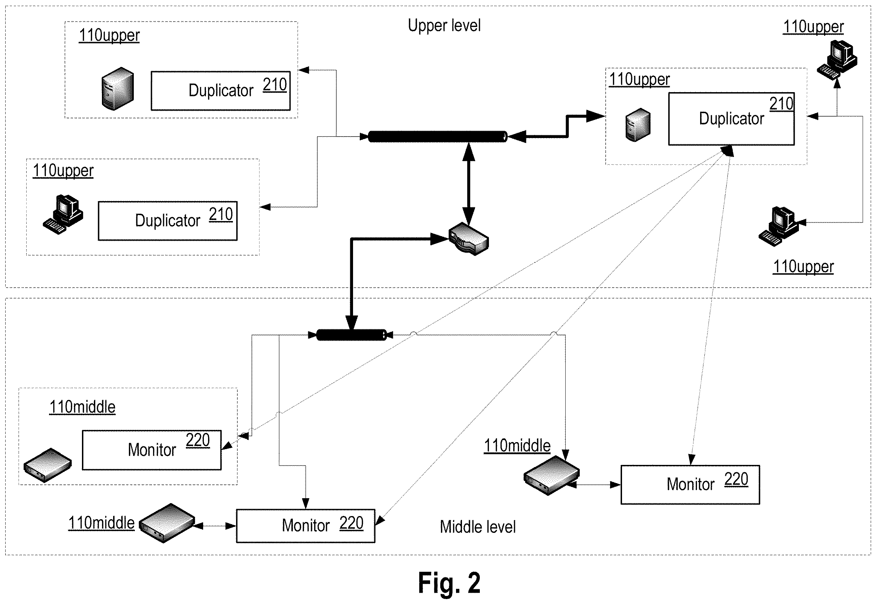

**Fig. 2** illustrates an exemplary realization of a system **200** for detecting anomalies in a technological system.

In the general case, the upper-level TS elements 110ᵤₚₚₑᵣ (computers on which the SCADA components are installed or engineering terminals) are combined into a separate protected data transmission network by systems and methods ordinarily known in the art of network systems. Furthermore, the upper-level TS elements 110ᵤₚₚₑᵣ send data packets (such as packets containing commands of the technological processes and parameters of the commands) to the middle-level TS elements 110_{middle} (in the general case, programmable logic controllers). Because the technological processes are designed to last dozens of years, the middle-level TS elements 110_{middle} in the general case are less protected and often become obsolete. That is, the middle-level TS elements typically operate using obsolete unprotected data transmission protocols. These middle-level TS elements typically also have known vulnerabilities. It is presumed that the IP addresses of the middle-level TS elements 110_{middle} (such as the PLCs) are known. In order to interfere with the operations of the PLCs, a hacker must send information packets to the IP address of the PLC.

Thus, the method of the present disclosure addresses the problems described above by at least determining which packets are "trusted", and which are "untrusted". In general, a trusted data packet is a data packet dispatched by one TS element, such as an upper-level TS element 110ᵤₚₚₑᵣ, to another TS element, such as a middle-level TS element 110_{middle}. In the context of the present disclosure, it is permissible to consider that data packets outgoing from the protected data transmission network are trusted. Trusted packets should be delivered to the middle-level TS elements 110_{middle}.

In one example, the system 200 contains at least one duplicator 210 and at least one monitor 220.

The duplicator 210 comprises a protected operating system with hypervisor function support, and is designed for installation on a TS element (in a particular instance, on an upper-level TS element 110ᵤₚₚₑᵣ). The protected operating system with hypervisor function support is used to run the existing operating systems and applications of the upper-level TS elements 110ᵤₚₚₑᵣ in a virtual environment. Using virtualization technology enables modifications to be made to components of the SCADA systems operating on the upper-level TS elements without modifying the software of the SCADA applications. For example, new attributes may be added to the components of the SCADA systems operating on the upper-level TS elements 110ᵤₚₚₑᵣ, without modifying the software of the SCADA applications.

In one example, the duplicator 210 installed on the upper-level TS element 110ᵤₚₚₑᵣ intercepts outgoing data packets addressed to other TS elements (such as middle-level elements 110_{middle}). The outgoing data packets are received from applications being executed in a guest operating system running in the virtual environment, from the guest operating system itself. In one example, the interception of the data packets is performed using virtualization methods.

In one example, the duplicator also determines the IP address of the middle-level TS element 110_{middle} to which the outgoing data packet is addressed.

In one example, each duplicator 210 establishes secure connections (indicated for one duplicator 210 in Fig. 2) with all monitors 220 located in the data transmission network, and sends to the monitors 220 information about each outgoing data packet that has been intercepted. In one example, the information sent to the monitors 220 includes the intercepted outgoing data packet itself in its initial or transformed form (for example, after encryption or packaging) and its check sum (such as MD5 or CRC). In one example, the information sent to the monitors 220 further includes: supplemental information obtained by the duplicator 210 as a result of the interception of the outgoing data packets. In one example, the duplicator 210 uses known cryptography methods of protection when sending the data to the monitors 220. In another example, an additional transformation or encryption of the intercepted outgoing data packets, by the duplicator 210, is provided by the hypervisor level.

In one example, if the IP address of the middle-level TS element 110_{middle} to which the outgoing data packet is addressed has been determined, the duplicator 210 sends the information to the IP address of the middle-level TS element 110_{middle} using a secure connection. In one example, the information as to the intercepted outgoing packets is also sent using the secure connection to monitors 220 located in a same data transmission network (or subnetwork) as the middle-level TS element 110_{middle} to which the outgoing data packet is addressed.

In one example, the outgoing data packet which has been intercepted by the duplicator 210 is not sent onward to the data transmission network, but remains in the memory of the hypervisor. After obtaining a confirmation from the monitor 220 as to the receiving of information about the intercepted data packet, the duplicator 210 sends the intercepted outgoing data packet saved in the memory of the hypervisor to the data transmission network in its original unchanged form.

In another example, for example, when no delays are permitted in sending of the data packets (i.e., the TS is working in real time), the intercepted outgoing packet is sent by the duplicator 210 to the data transmission network at once, i.e., the intercepted outgoing packet is sent to the data transmission network at the same time as the information being sent by the secure connection to the monitor 220.

Returning to **Fig. 2****,** modern ACS may have several components of the SCADA systems operating on the upper-level TS elements 110ᵤₚₚₑᵣ situated in different data transmission networks. In this scenario, each such network may contain a duplicator 210 performing the above described actions of intercepting an outgoing data packet and sending information about the intercepted data packet to the monitor 220.

The monitor 220, in one example, is implemented on a TS element 110. In another example, the monitor 220 is implemented on an upper-level TS element 110ᵤₚₚₑᵣ. In yet another example, the monitor 220 is implemented on a middle-level TS element 110_{middle}.

In one example, the monitor 220 is situated topologically in the data transmission network so as to intercept all data packets addressed to the TS elements 110. In one example, the monitor 220 operates (is implemented) on an existing TS element 110, such as a middle-level TS element 110_{middle} or an upper-level TS element 110ᵤₚₚₑᵣ, the monitor 220 being an executable application or service. In yet another example, the monitor 220 is a protected operating system with hypervisor function support, designed for installation on the middle-level TS element 110_{middle}. In another example, the monitor 220 is installed on an additional middle-level TS element 110_{middle} designed solely for the operation of the monitor 220.

As previously described, the monitor 220 receives, from the duplicator 210, information about the intercepted outgoing packets via a secure connection. After receiving the information about the receiving of that information. Moreover, the monitor 220 intercepts incoming data packets which are addressed to the middle-level TS elements 110_{middle} by the data transmission network. In one example, the interception of the incoming data packets is performed using virtualization methods known in the art. In yet another example, the interception is performed without the use of virtualization methods. For example, the interception may be performed using a socket opened in a mode of unprocessed (or minimally processed) data (i.e., in RAW mode).

In one example, the monitor 220 compares the information received on the secure connection from the duplicator 210 regarding the intercepted outgoing packets with the intercepted incoming packets that are addressed to the middle-level TS elements 110_{middle} in the data transmission network.

When the intercepted outgoing data packets are sent to the data transmission network by the duplicator 210 at the same time as the information about the intercepted outgoing data packets using the secure connection, the monitor 220 compares the information received about the intercepted outgoing data packets with the intercepted incoming data packets within a pre-determined interval of time (such as 1 second). If an incoming data packet has been intercepted and no information is received from the duplicator 210 during the pre-determined interval of time about the intercepted incoming data packet, then the monitor 220 detects an anomaly in the technological system.

In another example, when the intercepted outgoing data packets are sent to the data transmission network by the duplicator 210 after receiving a confirmation from the monitor 220 of the reception of information about the intercepted outgoing data packets using the secure connection, the monitor 220 compares the intercepted incoming data packets to the received information. If an incoming data packet has been intercepted and no information is received from the duplicator 210, then, the monitor 220 detects an anomaly in the technological system.

When an anomaly is detected for the technological system, information about the detected anomaly may be sent, by the monitor 220, to the components of the SCADA systems operating on the upper-level TS elements 110ᵤₚₚₑᵣ. The information about the detected anomaly is provided to the components of the SCADA systems both for the purpose of notification and for enabling the SCADA systems to take further actions to deal with the detected anomaly. For example, mitigating steps may be taken to reduce the risk of damage to components and reduce the chance of data loss.

In one example, if the monitor 220 is located in the data transmission network topologically after a first middle-level TS element 110_{middle} and before a second middle-level TS element 110_{middle}, and an anomaly is detected for the technological system, then the monitor 220 does not send the intercepted incoming data packet onward to the data transmission network - thereby counteracting the possible consequences of the resulting anomaly in the technological system. The middle-level TS element 110_{middle}, in this example, does not receive the intercepted incoming data packet, which prevents a perturbing action on the middle-level TS element 110_{middle}.

In yet another example, the monitor 220 may be located in the data transmission network on the same middle-level TS element 110_{middle} to which the intercepted incoming data packet was addressed. In this case, the monitor 220, as described above, counteracts the possible consequences of the resulting anomaly in the technological system.

An exemplary application of the method of the present disclosure is presented below. Suppose there is a building which is outfitted with an automated access system to the premises, a gymnasium, a swimming pool, and the building has at least a ventilation system and a fire suppression system. Suppose also the ACS and SCADA components are located in the data transmission network of the building in a protected environment (or in a protected subnetwork) yet intercommunicate with the programmable logic controllers which control the aforementioned systems, using the data transmission network. Moreover, the workers of the building and visitors may gain access to this same data transmission network. In practice, such data transmission networks exist rather often. The building are built without proper attention to IT security during their design or in consideration of savings material expenses during initial buildout.

Obviously, third parties may send data packets to the network which do not come from SCADA components and which may be received by the programmable logic controllers, which is an anomaly in the context of the method of the present disclosure. Thus, the present system, as described in the present disclosure, may be used to warn other components of the system about such anomalies. Thus, the duplicator 210 installed on the SCADA components intercept outgoing data packets and send the intercepted outgoing data packets to the monitor 220. Thus, the monitor 220 receives and compares all the incoming data packets addressed to the programmable logic controllers, making detection of anomalies possible. For example, if the data packet has been sent to the data transmission network not from a SCADA component, the anomaly may be detected and steps may be taken to counteract the effects. For instance, incoming data packets may be blocked.

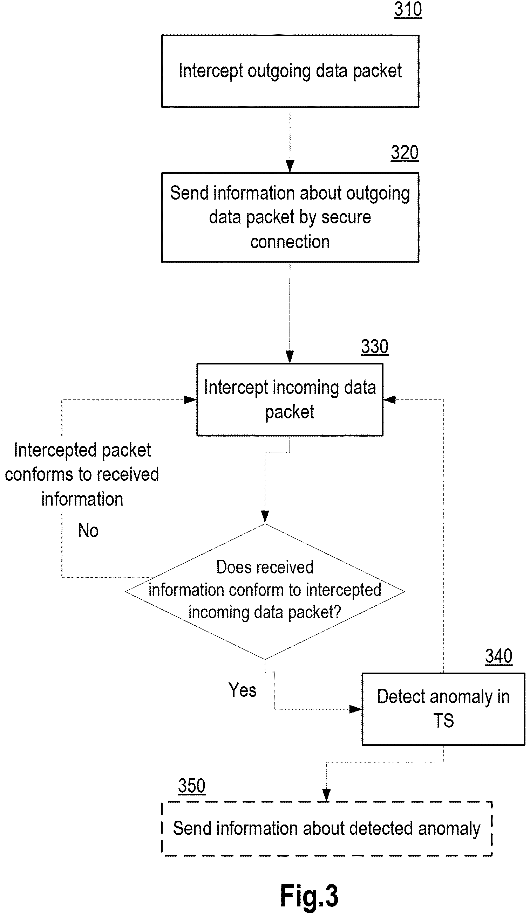

**Fig. 3** illustrates an exemplary method **300** for detecting anomalies in a technological system. The method **300** may be implemented on a computing system that comprises any number of devices, e.g., the system **200** described above.

In step 310, the duplicator 210, running on an upper-level element of a technological system, e.g., 110ᵤₚₚₑᵣ, intercepts at least one outgoing data packet addressed to a middle-level element, e.g., 110_{middle}, of the technological system. The upper-level element is running in a protected environment and the middle-level element is unprotected, e.g., runs unprotected data transmission protocols.

In one example, the duplicator 210, comprises a protected operating system with a hypervisor function support.

In yet another example, the upper-level element of the technological system comprises a SCADA component. In one example, the intercepting of the data packets is performed using virtualization techniques, e.g., virtualization techniques known in the art.

In step 320, the duplicator 210 sends information about the intercepted at least one data packet to a monitor 220 using a secure connection, wherein the monitor 220 is running on the middle-level element, 110_{middle}, of the technological system. In one example, the duplicator 210 establishes at least one secure connection with each monitor 220 located in the data transmission network, and sends information about each intercepted outgoing data packet to the monitors 220 with which the duplicator 210 has established at least one secure connection.

In one example, the monitor 220 is a protected operating system.

In another example, the monitor 220 is situated in a same data transmission network in which the middle-level element, 110_{middle}, of the technological system to which the intercepted at least one data packet is addressed is located. In one example, the monitor 220 is a protected operating system with a hypervisor function support that is designed for installation on the middle-level element, 110_{middle}, of the technological system.

In step 330, the monitor 220 intercepts at least one incoming data packet. In one example, the intercepting of the incoming at least one data packet is performed using virtualization techniques known in the art.

In step 340, the monitor 220 detects an anomaly in the technological system when the intercepted incoming at least one data packet does not conform to the information about the intercepted at least one data packet received from the duplicator 210. For the detection of anomaly, the monitor 220 compares the information about the intercepted outgoing data packets received from the duplicator 210 on the secure connection with the intercepted incoming data packets addressed to the middle-level elements, 110_{middle}, of the technological system in the data transmission network. If no anomaly is found, the method returns to step 330. In other words, an incoming data packet is intercepted and information about the intercepted data packet is obtained successfully from the duplicator 210. Thus, there is no anomaly detected.

In one example, in step 350, the monitor 220 sends information about the detected anomaly to the components of the SCADA systems operating on the upper-level elements, 110ᵤₚₚₑᵣ, of the technological system. In one example, the information about the detected anomaly is sent for notification purposes and/or for taking further steps to avert possible consequences of the detected anomaly in the technological system.

In one example, if an anomaly is detected, the method returns to step 330.

**Fig. 4** is a block diagram illustrating a computer system 20 on which examples of systems and methods for detecting anomalies in a technological system may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit 21 (also referred to as a processor) can include a single or multiple sets of processors having single or multiple cores. The processor 21 may execute one or more computerexecutable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a specialpurpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in Fig. 4, above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and timeconsuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

## Claims

1. A method (300) for detecting anomalies in a technological system, the method comprising:
intercepting (310), by a duplicator (210) running on an upper-level element of the technological system at least one outgoing data packet addressed to a middle-level element of the technological system, wherein the upper-level element of the technological system includes at least controllers which control computers and human-machine interfaces, and the middle-level element of the technological system includes at least programmable logic controller, PLC, devices;
sending (320), by the duplicator (210), information about the intercepted at least one outgoing data packet to a monitor (220) using a secure connection, the monitor (220) running on the middle-level element;
intercepting (330), by the monitor (220), at least one incoming data packet,
comparing, by the monitor (220), the information received from the duplicator (210) with the intercepted at least one incoming data packet, wherein the comparison is performed with information received from the duplicator (210) within a pre-determined interval of time; and
detecting (340), by the monitor (220), an anomaly in the technological system when the intercepted at least one incoming data packet does not conform to the information received from the duplicator (210).

2. The method (300) according to claim 1, further comprising:
sending (350), by the monitor (220), information about the detected anomaly to all upper-level elements of the technological system.

3. The method (300) according to any of claims 1 to 2, wherein the upper-level element is running in a protected environment and the middle-level element is using an unprotected data transmission protocol.

4. The method (300) according to any of claims 1 to 3, further comprising:
establishing, by the duplicator (210), at least one secure connection with each monitor (220) located in the data transmission network; and
sending, by the duplicator (210), information about each intercepted outgoing data packet to the monitors (220) with which the duplicator (210) has established at least one secure connection.

5. The method (300) according to any of claims 1 to 4, wherein the monitor (220) is a protected operating system.

6. The method (300) according to any of claims 1 to 5, wherein the monitor (220) is located in a same data transmission network in which the middle-level element to which the intercepted at least one outgoing data packet is addressed is located.

7. The method (300) according to any of claims 1 to 6, wherein the upper-level elements of the technological system which operate in a protected environment comprise at least: supervisory control and data acquisition, SCADA, devices.

8. A system (200) for detecting anomalies in a technological system, comprising:
at least one processor configured to:
intercept (310), by a duplicator (210) running on an upper-level element of the technological system at least one outgoing data packet addressed to a middle-level element of the technological system, wherein the upper-level element of the technological system includes at least controllers which control computers and human-machine interfaces, and the middle-level element of the technological system includes at least programmable logic controller, PLC, devices;
send (320), by the duplicator (210), information about the intercepted at least one outgoing data packet to a monitor (220) using a secure connection, the monitor (220) running on the middle-level element;
intercept (330), by the monitor (220), at least one incoming data packet;
compare, by the monitor (220), the information received from the duplicator (210) with the intercepted at least one incoming data packet, wherein the comparison is performed with information received from the duplicator (210) within a pre-determined interval of time; and
detect (340), by the monitor (220), an anomaly in the technological system when the intercepted at least one incoming data packet does not conform to the information received from the duplicator (210).

9. The system (200) according to claim 8, the processor further configured to:
send (350), by the monitor (220), information about the detected anomaly to all upper-level elements of the technological system.

10. The system (200) according to any of claims 8 to 9, wherein the upper-level element is running in a protected environment and the middle-level element is using an unprotected data transmission protocol.

11. The system (200) according to any of claims 8 to 10, the processor further configured to:
establish, by the duplicator (210), at least one secure connection with each monitor (220) located in the data transmission network; and
send, by the duplicator (210), information about each intercepted outgoing data packet to the monitors (220) with which the duplicator (210) has established at least one secure connection.

12. The system (200) according to any of claims 8 to 11, wherein the monitor (220) is a protected operating system.

13. The system (200) according to any of claims 8 to 12, wherein the monitor (220) is located in a same data transmission network in which the middle-level element to which the intercepted at least one outgoing data packet is addressed is located.

14. The system (200) according to any of claims 8 to 13, wherein the upper-level elements of the technological system which operate in a protected environment comprise at least: supervisory control and data acquisition, SCADA, devices.

## Patentansprüche

1. Verfahren (300) zum Detektieren von Anomalien in einem technologischen System, wobei das Verfahren umfasst:
Abfangen (310), durch einen Duplizierer (210), der auf einem Element oberer Ebene des technologischen Systems läuft, von zumindest einem ausgehenden Datenpaket, das an ein Element mittlerer Ebene des technologischen Systems adressiert ist, wobei das Element oberer Ebene des technologischen Systems zumindest Controller enthält, die Computer und Mensch-Maschine-Schnittstellen steuern bzw. regeln, und das Element mittlerer Ebene des technologischen Systems zumindest Vorrichtungen zur speicherprogrammierbaren Steuerung bzw. Regelung bzw. Programmable Logic Controller, PLC, enthält;
Senden (320), durch den Duplizierer (210), von Informationen über das abgefangene zumindest eine ausgehende Datenpaket an einen Monitor (220) unter Verwendung einer sicheren Verbindung, wobei der Monitor (220) auf dem Element mittlerer Ebene läuft;
Abfangen (330), durch den Monitor (220), von zumindest einem eingehenden Datenpaket,
Vergleichen, durch den Monitor (220), der von dem Duplizierer (210) empfangenen Informationen mit dem abgefangenen zumindest einen eingehenden Datenpaket, wobei der Vergleich mit Informationen durchgeführt wird, die von dem Duplizierer (210) innerhalb eines vorbestimmten Zeitintervalls empfangen werden; und
Detektieren (340), durch den Monitor (220), einer Anomalie in dem technologischen System, wenn das abgefangene zumindest eine eingehende Datenpaket nicht mit den von dem Duplizierer (210) empfangenen Informationen übereinstimmt.

2. Verfahren (300) nach Anspruch 1, ferner umfassend:
Senden (350), durch den Monitor (220), von Informationen über die detektierte Anomalie an alle Elemente oberer Ebene des technologischen Systems.

3. Verfahren (300) nach einem der Ansprüche 1 bis 2, wobei das Element oberer Ebene in einer geschützten Umgebung läuft und das Element mittlerer Ebene ein ungeschütztes Datenübertragungsprotokoll verwendet.

4. Verfahren (300) nach einem der Ansprüche 1 bis 3, ferner umfassend:
Herstellen, durch den Duplizierer (210), von zumindest einer sicheren Verbindung mit jedem Monitor (220), der sich in dem Datenübertragungsnetzwerk befindet, und
Senden, durch den Duplizierer (210), von Informationen über jedes abgefangene ausgehende Datenpaket an die Monitore (220), mit denen der Duplizierer (210) zumindest eine sichere Verbindung hergestellt hat.

5. Verfahren (300) nach einem der Ansprüche 1 bis 4, wobei der Monitor (220) ein geschütztes Betriebssystem ist.

6. Verfahren (300) nach einem der Ansprüche 1 bis 5, wobei sich der Monitor (220) in demselben Datenübertragungsnetzwerk befindet, in dem sich das Element mittlerer Ebene befindet, an welches das abgefangene zumindest eine ausgehende Datenpaket adressiert ist.

7. Verfahren (300) nach einem der Ansprüche 1 bis 6, wobei die Elemente oberer Ebene des technologischen Systems, die in einer geschützten Umgebung arbeiten bzw. betrieben werden, zumindest umfassen: Vorrichtungen zur Überwachungssteuerung bzw. -regelung und Datenerfassung bzw. Supervisory Control and Data Acquisition, SCADA.

8. System (200) zum Detektieren von Anomalien in einem technologischen System, umfassend:
zumindest einen Prozessor, der konfiguriert ist zum:
Abfangen (310), durch einen Duplizierer (210), der auf einem Element oberer Ebene des technologischen Systems läuft, von zumindest einem ausgehenden Datenpaket, das an ein Element mittlerer Ebene des technologischen Systems adressiert ist, wobei das Element oberer Ebene des technologischen Systems zumindest Controller enthält, die Computer und Mensch-Maschine-Schnittstellen steuern bzw. regeln, und das Element mittlerer Ebene des technologischen Systems zumindest Vorrichtungen zur speicherprogrammierbaren Steuerung bzw. Regelung bzw. Programmable Logic Controller, PLC, enthält;
Senden (320), durch den Duplizierer (210), von Informationen über das abgefangene zumindest eine ausgehende Datenpaket an einen Monitor (220) unter Verwendung einer sicheren Verbindung, wobei der Monitor (220) auf dem Element mittlerer Ebene läuft;
Abfangen (330), durch den Monitor (220), von zumindest einem eingehenden Datenpaket,
Vergleichen, durch den Monitor (220), der von dem Duplizierer (210) empfangenen Informationen mit dem abgefangenen zumindest einen eingehenden Datenpaket, wobei der Vergleich mit Informationen durchgeführt wird, die von dem Duplizierer (210) innerhalb eines vorbestimmten Zeitintervalls empfangen werden; und
Detektieren (340), durch den Monitor (220), einer Anomalie in dem technologischen System, wenn das abgefangene zumindest eine eingehende Datenpaket nicht mit den von dem Duplizierer (210) empfangenen Informationen übereinstimmt.

9. System (200) nach Anspruch 8, wobei der Prozessor ferner konfiguriert ist zum: Senden (350), durch den Monitor (220), von Informationen über die detektierte Anomalie an alle Elemente oberer Ebene des technologischen Systems.

10. System (200) nach einem der Ansprüche 8 bis 9, wobei das Element oberer Ebene in einer geschützten Umgebung läuft und das Element mittlerer Ebene ein ungeschütztes Datenübertragungsprotokoll verwendet.

11. System (200) nach einem der Ansprüche 8 bis 10, wobei der Prozessor ferner konfiguriert ist zum:
Herstellen, durch den Duplizierer (210), von zumindest einer sicheren Verbindung mit jedem Monitor (220), der sich in dem Datenübertragungsnetzwerk befindet, und
Senden, durch den Duplizierer (210), von Informationen über jedes abgefangene ausgehende Datenpaket an die Monitore (220), mit denen der Duplizierer (210) zumindest eine sichere Verbindung hergestellt hat.

12. System (200) nach einem der Ansprüche 8 bis 11, wobei der Monitor (220) ein geschütztes Betriebssystem ist.

13. System (200) nach einem der Ansprüche 8 bis 12, wobei sich der Monitor (220) in demselben Datenübertragungsnetzwerk befindet, in dem sich das Element mittlerer Ebene befindet, an welches das abgefangene zumindest eine ausgehende Datenpaket adressiert ist.

14. System (200) nach einem der Ansprüche 8 bis 13, wobei die Elemente oberer Ebene des technologischen Systems, die in einer geschützten Umgebung arbeiten bzw. betrieben werden, zumindest umfassen: Vorrichtungen zur Überwachungssteuerung bzw. -regelung und Datenerfassung bzw. Supervisory Control and Data Acquisition, SCADA.

## Revendications

1. Procédé (300) de détection d'anomalies dans un système technologique, le procédé comprenant :
l'interception (310), par un duplicateur (210) s'exécutant sur un élément de niveau supérieur du système technologique, d'au moins un paquet de données sortant adressé à un élément de niveau intermédiaire du système technologique, dans lequel l'élément de niveau supérieur du système technologique comprend au moins des dispositifs de commande qui commandent des ordinateurs et des interfaces homme-machine, et l'élément de niveau intermédiaire du système technologique comprend au moins des dispositifs de contrôleur logique programmable, PLC ;
l'envoi (320), par le duplicateur (210), d'informations concernant l'au moins un paquet de données sortant intercepté à un dispositif de surveillance (220) en utilisant une connexion sécurisée, le dispositif de surveillance (220) s'exécutant sur l'élément de niveau intermédiaire ;
l'interception (330), par le dispositif de surveillance (220), d'au moins un paquet de données entrant,
la comparaison, par le dispositif de surveillance (220), des informations reçues à partir du duplicateur (210) avec l'au moins un paquet de données entrant intercepté, dans lequel la comparaison est réalisée avec des informations reçues à partir du duplicateur (210) à l'intérieur d'un intervalle de temps prédéterminé ; et
la détection (340), par le dispositif de surveillance (220), d'une anomalie dans le système technologique quand l'au moins un paquet de données entrant intercepté ne se conforme pas aux informations reçues à partir du duplicateur (210).

2. Procédé (300) selon la revendication 1, comprenant en outre :
l'envoi (350), par le dispositif de surveillance (220), d'informations concernant l'anomalie détectée à tous les éléments de niveau supérieur du système technologique.

3. Procédé (300) selon l'une quelconque des revendications 1 à 2, dans lequel l'élément de niveau supérieur s'exécute dans un environnement protégé et l'élément de niveau intermédiaire utilise un protocole de transmission de données non protégé.

4. Procédé (300) selon l'une quelconque des revendications 1 à 3, comprenant en outre :
l'établissement, par le duplicateur (210), d'au moins une connexion sécurisée avec chaque dispositif de surveillance (220) situé dans le réseau de transmission de données ; et
l'envoi, par le duplicateur (210), d'informations concernant chaque paquet de données sortant intercepté aux dispositifs de surveillance (220) avec lesquels le duplicateur (210) a établi au moins une connexion sécurisée.

5. Procédé (300) selon l'une quelconque des revendications 1 à 4, dans lequel le dispositif de surveillance (220) est un système d'exploitation protégé.

6. Procédé (300) selon l'une quelconque des revendications 1 à 5, dans lequel le dispositif de surveillance (220) est situé dans un même réseau de transmission de données dans lequel est situé l'élément de niveau intermédiaire auquel au moins un paquet de données sortant intercepté est adressé.

7. Procédé (300) selon l'une quelconque des revendications 1 à 6, dans lequel les éléments de niveau supérieur du système technologique qui fonctionnent dans un environnement protégé comprennent au moins : des dispositifs de commande de supervision et d'acquisition de données, SCADA.

8. Système (200) pour la détection d'anomalies dans un système technologique, comprenant :
au moins un processeur configuré pour :
intercepter (310), par un duplicateur (210) s'exécutant sur un élément de niveau supérieur du système technologique, au moins un paquet de données sortant adressé à un élément de niveau intermédiaire du système technologique, dans lequel l'élément de niveau supérieur du système technologique comprend au moins des dispositifs de commande qui commandent des ordinateurs et des interfaces homme-machine, et l'élément de niveau intermédiaire du système technologique comprend au moins des dispositifs de contrôleur logique programmable, PLC ;
envoyer (320), par le duplicateur (210), des informations concernant l'au moins un paquet de données sortant intercepté à un dispositif de surveillance (220) en utilisant une connexion sécurisée, le dispositif de surveillance (220) s'exécutant sur l'élément de niveau intermédiaire ;
intercepter (330), par le dispositif de surveillance (220), au moins un paquet de données entrant,
comparer, par le dispositif de surveillance (220), les informations reçues à partir du duplicateur (210) avec l'au moins un paquet de données entrant intercepté, dans lequel la comparaison est réalisée avec des informations reçues à partir du duplicateur (210) à l'intérieur d'un intervalle de temps prédéterminé ; et
détecter (340), par le dispositif de surveillance (220), une anomalie dans le système technologique quand l'au moins un paquet de données entrant intercepté ne se conforme pas aux informations reçues à partir du duplicateur (210).

9. Système (200) selon la revendication 8, le processeur étant configuré en outre pour :
envoyer (350), par le dispositif de surveillance (220), des informations concernant l'anomalie détectée à tous les éléments de niveau supérieur du système technologique.

10. Système (200) selon l'une quelconque des revendications 8 à 9, dans lequel l'élément de niveau supérieur s'exécute dans un environnement protégé et l'élément de niveau intermédiaire utilise un protocole de transmission de données non protégé.

11. Système (200) selon l'une quelconque des revendications 8 à 10, le processeur matériel étant configuré en outre pour :
établir, par le duplicateur (210), au moins une connexion sécurisée avec chaque dispositif de surveillance (220) situé dans le réseau de transmission de données ; et
envoyer, par le duplicateur (210), des informations concernant chaque paquet de données sortant intercepté aux dispositifs de surveillance (220) avec lesquels le duplicateur (210) a établi au moins une connexion sécurisée.

12. Système (200) selon l'une quelconque des revendications 8 à 11, dans lequel le dispositif de surveillance (220) est un système d'exploitation protégé.

13. Système (200) selon l'une quelconque des revendications 8 à 12, dans lequel le dispositif de surveillance (220) est situé dans un même réseau de transmission de données dans lequel est situé l'élément de niveau intermédiaire auquel au moins un paquet de données sortant intercepté est adressé.

14. Système (200) selon l'une quelconque des revendications 8 à 13, dans lequel les éléments de niveau supérieur du système technologique qui fonctionnent dans un environnement protégé comprennent au moins : des dispositifs de commande de supervision et d'acquisition de données, SCADA.
